# EUROPÄISCHE PATENTSCHRIFT

(11) **EP 2 599 750 B1**
(45) Veröffentlichungstag und Bekanntmachung des Hinweises auf die Patenterteilung: **30.07.2014**
(21) Anmeldenummer: 11191199.6
(22) Anmeldetag: 29.11.2011
(51) Int. Cl.: C01F 11/18

(54) **Verfahren und Anlage zur semikontinuierlichen Herstellung von kristallinem Calciumcarbonat**
Method and assembly for semi-continuous manufacture of crystalline calcium carbonate
Procédé et installation de fabrication semi-continue de carbonate de calcium cristallin

(43) Veröffentlichungstag der Anmeldung: 05.06.2013
(73) Patentinhaber: HF Biotec Berlin GmbH, 10117 Berlin (DE)
(72) Erfinder: Follmann, Heinrich, 10117 Berlin (DE); Hillbrecht, Berit, 15366 Hoppegarten (DE); Martin, Torsten, 10247 Berlin (DE)
(74) Vertreter: Gulde & Partner

(56) Entgegenhaltungen:
- EP-A1- 1 790 615
- WO-A1-2006/005793
- WO-A2-2008/128776
- DE-A1- 19 943 093
- UKRAINCZYK ET AL: "Experimental design approach to calcium carbonate precipitation in a semicontinuous process", POWDER TECHNOLOGY, ELSEVIER SEQUOIA, LAUSANNE, CH, Bd. 171, Nr. 3, 8. Februar 2007 (2007-02-08), Seiten 192-199, XP005879932, ISSN: 0032-5910, DOI: 10.1016/J.POWTEC.2006.10.046

## Beschreibung

Die vorliegende Erfindung betrifft ein Verfahren und eine Anlage zur semikontinuierlichen Herstellung von kristallinem Calciumcarbonat (gefälltes Calciumcarbonat, PCC) durch Umsetzung von Calciumhydroxid mit CO₂, wobei das Calciumhydroxid als Kalkmilch bereitgestellt wird und als CO₂-Quelle anfallendes Biogas dient. Das erfindungsgemäße Verfahren und die Anlage erlauben daneben die simultane Reinigung des eingesetzten Biogases, das durch die Abreicherung des CO₂ zu Biomethan mit einem bevorzugten Gehalt von 85 bis 99 Vol% Methan aufgereinigt wird.

Mit dem Verfahren und der Anlage der vorliegenden Erfindung lässt sich ein energetisch günstiges Verfahren verwirklichen, das unabhängig von Schwankungen in der Menge des Biogases und in der CO₂-Konzentration des Biogases arbeitet und mit dem jede industriell gewünschte Kristallmorphologie von PCC hergestellt werden kann.

Aus WO 2008/128776 A2 ist ein Verfahren zur Reinigung von Biogas bekannt, bei dem CaCO₃ in kristalliner Form als wertvolles Nebenprodukt ausgefällt wird. Schwerpunkt dieses Verfahrens ist die Erzeugung eines CaCO₃ zum Einsatz vornehmlich als Bodenverbesserer. Weiterhin ist beschrieben, dass im Batch-Betrieb die Reaktionsbedingungen in Verbindung mit den konstruktiven Details des Begasungssystems so gewählt und eingestellt werden können, dass homogene definierte CaCO₃-Kristalle als Endprodukt entstehen.

Es besteht jedoch Bedarf an einem kontinuierlich arbeitenden Prozess, der gleichzeitig volumetrische Schwankungen der anfallenden Biogasmenge und Schwankungen in der Zusammensetzung des Biogases ausgleicht. Der Prozess soll auch bedarfsgerecht zu gewissen frei wählbaren Zeiten deutlich mehr PCC liefern und zu anderen Zeiten wiederum kein fertiges PCC liefern, sondern lediglich Biogas aufreinigen.

In EP 0 799 797 A1 wird ein Verfahren beschrieben, bei dem Calziumcarbonat in seriell geschalteten Zellen kontinuierlich hergestellt wird. Jede dieser Zellen kann mit Gas und Kalkmilch beschickt und mit Hilfe eines Rührwerks durchmischt werden. Die teilweise umgesetzte Kalkmilch gelangt drucklos über ein geneigtes Rohr in die nächste Zelle. Die Kristallbildung in der Carboxylierungsreaktion wird über die Gasmenge, die Temperatur und die Kalkmilchkonzentration gesteuert.

Da der Gehalt des Biogases an CO₂ durch die kontinuierliche Fermentation vorgegeben ist, stellt sich bei diesem Verfahren eine Steuerung des Kristallwachstums als außerordentlich schwierig dar..

Ein Prozess für die Herstellung von PCC mit hohem Feststoffgehalt ohne einen zusätzlichen Entwässerungsschritt wird in WO 2008/128545 A1 beschrieben. Beschrieben werden zwei oder mehrere parallele, separate Reaktionsbehälter, in welchen Calziumhydroxid mit einem CO₂ enthaltenden Gas in Kontakt gebracht wird. Diese Reaktionsbehälter sind durch eine Rezirkulationsleitung miteinander verbunden, wobei die Rezirkulationsleitung Dosierstellen für CaO oder Ca(OH)₂ in fester Form aufweist.

Dieser Prozess beschreibt eine Carboxylierungsreaktion mit simultaner Löschung. Dem Fachmann ist bekannt, dass die bei der Kalklöschung gewählten Parameter direkten Einfluss auf die zu erwartende PCC- Morphologie haben. Je nach Fließgeschwindigkeit der Suspension kann eine inhomogene Verteilung von Temperatur und Kalkmilchkonzentration auftreten, was das Herstellen von PCC mit einer homogenen definierten Kristallstruktur erschwert.

Es ist bekannt, dass unterschiedliche Morphologien auch in einem fed batch-Verfahren hergestellt werden können. Dabei wird so vorgegangen, dass in einem Reaktor mit konventioneller Begasungsvorrichtung zunächst eine kleinere Menge an Ca(OH)₂ Suspension vorgelegt wird und anschließend unter Konstanthaltung der Leitfähigkeit der Reaktor aufgefüllt wird bis zum maximal möglichen Füllstand. In dieser Phase werden die Bedingungen für die gewünschte Morphologie festgelegt. Anschließend wird die Reaktion im selben Reaktor zu Ende geführt. Den wechselnden Gaszusammensetzungen und dem unterschiedlichen Mengenanfall des Biogases kommt diese Betriebsweise nicht entgegen. Hinzu kommt, dass sich Phasen mit und ohne Belüftung abwechseln, Biogas jedoch konstant anfällt und nicht abgestellt oder in die Umgebungsluft abgeleitet werden kann. Ein Reaktor, der über weite Strecken der Reaktion nur mit Minderfüllstand arbeitet, benötigt auch mehr Energie als ein mit konstantem Füllstand arbeitender Reaktor.

In der DE 199 43 093 A1 wird ein mehrstufiges kontinuierliches Verfahren beschrieben, bei dem grundsätzlich zwischen der Keimbildungsphase und der Keimwachstumsphase unterschieden wird. Die Keimbildungsphase wird in einem kontinuierlich betriebenen Reaktor mit Begasungsvorrichtung durchgeführt. Je nach verlangter späterer Morphologie durchströmen 1,2 bis 2,4 µm große Ca(OH)₂-Kristallite in wässriger Lösung einen ersten Reaktor und werden dort mit einem CO₂-haltigen Gas in Kontakt gebracht. Die für die erste Stufe benötigte wirksame CO₂-Konzentration wird dabei durch Anlegen unterschiedlich hoher Gaskonzentrationen bewirkt. Der relative Umsatz an PCC (definiert durch den Quotienten aus abreagiertem Ca(OH)₂ zu nicht abreagiertem Ca(OH)₂) wird vorgegeben durch die Größe des Reaktors in Verbindung mit der Durchsatzrate der Kalkmilchsuspension. Somit liegen die Bedingungen für die Ausbildung einer gewissen Keimmorphologie vor, wenn zusätzlich noch die dem Fachmann bekannten weiteren Bedingungen der Kristallbildung beachtet werden.

Nach Verlassen des ersten Reaktors (des Keimbildungsreaktors) kann die bis zu einem bestimmten Niveau anreagierte Suspension in einem Zwischenbehälter gelagert werden. Von dort wird die Suspension in den Keimwachstumsreaktor überführt, der ebenfalls kontinuierlich betrieben wird. Hier wird typischerweise eine höhere CO₂ -Konzentration im Versorgungsgas eingestellt, um zu einer höheren wirksamen CO₂ Konzentration in der flüssigen Phase zu gelangen.

Diese kontinuierliche Betriebsweise und Anordnung weist Unzulänglichkeiten auf, die weiter unten beschrieben werden und die bereits bei technischen Anlagen, die üblicherweise mit Rauch- oder Kilngasen betrieben werden, nachteilig sind. Auch ist es im Falle des Einsatzes von kontinuierlich anfallendem Biogas nicht möglich, zu jeder Zeit einen vordefinierten Reinheitsgrad des aus dem Biogas hergestellten Biomethans zu gewährleisten.

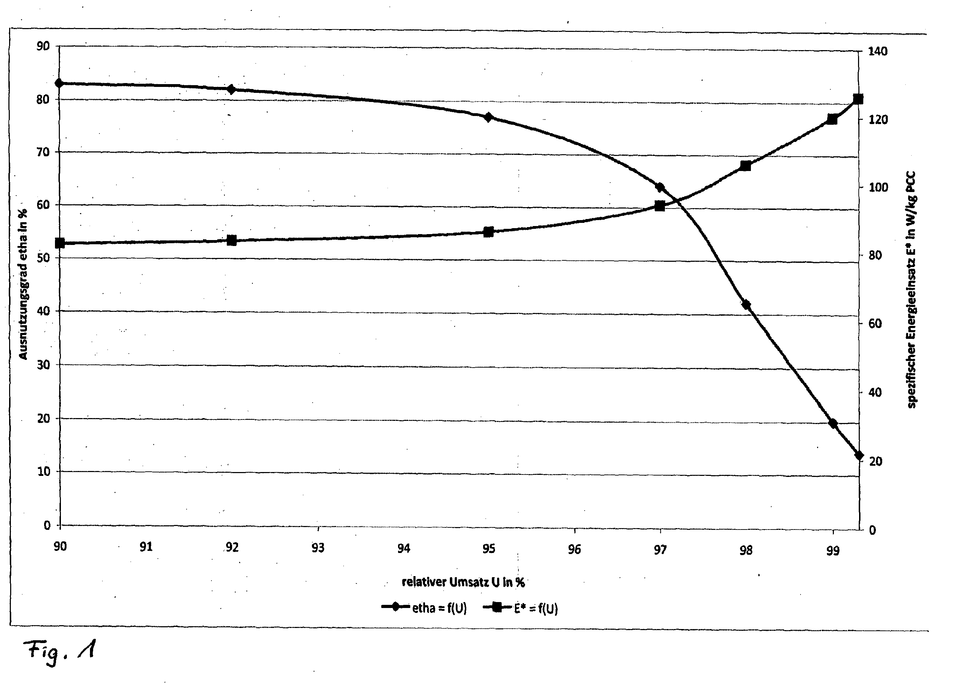

Der kontinuierlich betriebene Reaktor der zweiten Stufe (Keimwachstum) muss zum Erreichen eines Umsatzes von quasi 100% am Endpunkt der Reaktion bei 99 bis 99,9 % gefahren werden. In diesem Bereich nimmt die Gasausnutzung stark ab. Messungen haben gezeigt, dass die Abnahme je nach gewähltem Begasungssystem von 70 bis 85 % CO₂-Ausnutzung bis auf weniger als 10 % CO₂-Ausnutzung reicht (vgl. Fig.1). Begründet ist dies in dem stetig fortschreitenden Abfall des pH-Wertes mit gleichzeitiger Verschiebung des Carbonatgleichgewichtes. Der Abfall des pH-Wertes von z.B. 10 auf 9 bedeutet eine Verminderung des Carbonatgehaltes um den Faktor 10 bei ansonsten gleichbleibenden Bedingungen.

Gleichzeitig steigt aber auch der spezifische Energieeintrag der Begasungsvorrichtung. Pro Mol wirksam eingetragenem CO₂ muss ein Mehrfaches an Trägergas (Inertgas im Sinne dieser Reaktion) mit gefördert werden.

Wenn nun die Kalkmilch mit einem noch geringen Grad an Abreaktion in den Keimwachstumsreaktor gepumpt wird, muss die gesamte verbleibende Restreaktion (also in der Regel der größere Teil) an einem energetisch ungünstigen Punkt betrieben werden. Messungen haben diese Zusammenhänge bestätigt.

In Figur 1 ist der Gasausnutzungsgrad gegen den relativen Umsatz bzw. der spezifische Energieeinsatz als Funktion des Umsatzgrades dargestellt.

Nach dem Verfahren der DE 199 43 093 A1 ist auch eine für die Herstellung einiger PCC- Morphologien erforderliche Nachbegasung zur Stabilisierung der Kristalle kontinuierlich im zweiten Reaktor (Kristallwachstumsreaktor) nicht durchführbar. Diese setzt auf einen 100 %igen Umsatz auf und soll die partielle Rückreaktion des CaCO₃ zu Ca(OH)₂ verhindern.

Keimbildung und Keimreifung erfordern häufig unterschiedlich hohe wirksame CO₂-Konzentrationen (Übersättigungen), welche bei der in DE 199 43 093 A1 beschriebenen Kombination aus Gaseintragssystem und Reaktor nur durch Wechsel des CO₂- Niveaus des eingetragenen Gases realisiert werden. Liegt jedoch ein CO₂-haltiges Gas mit einem konstanten CO₂- Niveau vor, lässt sich der eigentliche Stoffübergang kaum variieren.

Die hier aufgeführten Nachteile gelten in gleichem Maße für einstufige kontinuierliche Verfahren.

Es ist somit die Aufgabe der vorliegenden Erfindung, ein Verfahren und eine Anlage zur Verfügung zu stellen, die unabhängig von der Menge des anfallenden bzw. zur Verfügung stehenden Biogases und unabhängig von dessen CO2-Konzentration zuverlässig betrieben werden können.

Der Betrieb soll mit möglichst geringem energetischem Aufwand erfolgen.

Eine weitere Aufgabe der vorliegenden Erfindung besteht darin, das Verfahren bzw. die Anlage so zu gestalten, dass jede von den Anwendern gewünschte, definierte Kristallform des gefällten Calciumcarbonats hergestellt werden kann.

Das Verfahren soll auch insofern variabel sein, dass es bedarfsgerecht zu frei wählbaren Zeiten deutlich mehr gefälltes Calciumcarbonat liefert und zu anderen Zeiten kein fertiges PCC liefert, sondern lediglich Biogas aufreinigt.

Die Aufgabe der Erfindung wird durch ein Verfahren gemäß Anspruch 1 und die besonderen Ausführungsformen der Unteransprüche gelöst. Das erfindungsgemäße Verfahren zur Herstellung von kristallinem Calciumcarbonat durch Umsetzung von Calciumhydroxid mit CO₂ und zur simultanen Aufreinigung des Biogases durch Abreicherung des CO2, das eine erste Stufe der Keimbildung der Calciumcarbonatkeime und eine nachfolgende, von der Keimbildung getrennte Stufe des Kristallwachstums umfasst, ist dadurch gekennzeichnet, das es semikontinuierlich geführt wird, indem
a) in der ersten Stufe die Keimbildung in einem oder mehreren Reaktoren einstufig oder mehrstufig kontinuierlich und mit optional variablem Füllstand an Kalkmilch in jedem Reaktor betrieben wird und
b) in der zweiten Stufe Kristallwachstum und Kristallstabilisierung in einem oder mehreren Reaktoren im Batch-Verfahren und mit konstantem Füllstand an teilumgesetzter Kalkmilch in jedem Reaktor betrieben werden,
wobei der Eintrag von Biogas und Umluft in die Reaktoren der Stufen a) und b) mittels einer in jedem Reaktor vorhandenen Begasungseinrichtung, vorzugsweise einer Begasungsturbine, erfolgt und
in Stufe a) die gewünschte Kristallform der Calciumcarbonatkristalle durch die voneinander unabhängige Einstellung der Konzentration der Kalkmilch an Calciumhydroxid, der mittleren hydraulischen Verweilzeit der eingetragenen Kalkmilch, des Umsatzgrades von Calciumhydroxid mit CO₂ und des Sättigungsgrades der Kalkmilch mit CO₂ gesteuert wird.

Das Verfahren ist also aufgeteilt in eine einstufig bis mehrstufig kontinuierliche betriebene Phase a) der Keimbildung sowie eine oder mehrere batchweise betriebene Stufe(n) b) der Kristallreifung und Kristallstabilisierung.

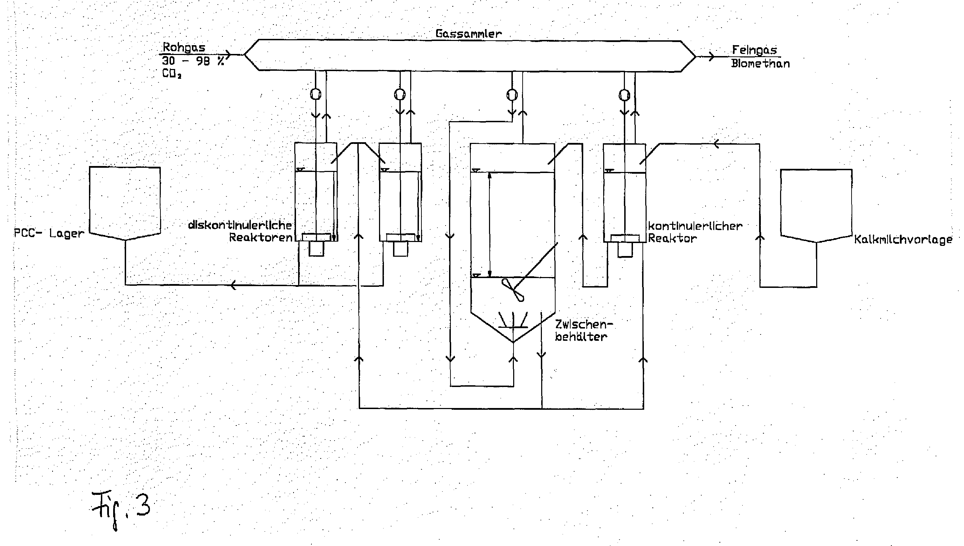

Das Arbeiten mit variablem Füllstand in der kontinuierlich arbeitenden Stufe a) wird in einer Ausführungsform der Erfindung dadurch gewährleistet, dass jeder Reaktor in Stufe a) mit einem Zwischenbehälter verbunden ist (vgl. Fig. 3), der das gleiche bis hundertfache des Volumens des mit ihm verbundenen kontinuierlich arbeitenden Reaktors aufweist, vorzugsweise das ein bis zwanzigfache des mit ihm verbundenen Reaktorvolumens.

Dieser Zwischenbehälter kann, falls erforderlich, mit einem Rührwerk versehen sein und/oder einer Begasungsvorrichtung zum Eintrag von Biogas.

Das Rühren verhindert die Sedimentation der Partikel in der Suspension, die Begasungsvorrichtung verhindert die mögliche Umwandlung der bereits gebildeten Kristalle in andersartige Kristalle, die die Qualität und Homogenität des späteren Endproduktes negativ beeinflussen würden. Das Rühren und die Intensität der Begasung können so aufeinander abgestimmt werden, dass einerseits eine Rückreaktion mit Sicherheit vermieden wird, andererseits ein Reaktionsfortschritt erzielt wird, der klein ist im Verhältnis zur spezifischen Umsatzrate der vorangegangenen Stufe.

Aus diesem Zwischenbehälter wird nunmehr unabhängig von der kontinuierlich arbeitenden ersten Stufe die unvollständig umgesetzte Suspension in den/die Reaktoren der zweiten Stufe überführt, in der batchweise Kristallwachstum und Kristallstabilisierung unter Einstellung der gewünschten Parameter erfolgen.

Es ist erfindungsgemäß auch möglich, aus dem Zwischenbehälter einen Teilvolumenstrom abzuziehen und diesen in den letzten (oder einen der vorherigen) in der kontinuierlichen Stufe arbeitenden Reaktoren rückzuführen. Dies kann Vorteile bieten, wenn das Biogasangebot und/oder der Methangehalt des Biogases gering werden. Deshalb weist der Zwischenbehälter sowohl eine Hin- als auch eine Rückführung zum kommunizierenden kontinuierlichen Reaktor auf.

Der Zwischenbehälter dient somit als notwendiger Puffer für Mangelbetrieb bei Bereitstellung von CO₂-Äquivalenten einerseits, andererseits auch als ein im Füllstand variabel einstellbares Gefäß, welches bei einem Überangebot von CO₂ aufgefüllt werden kann.

In einer weiteren Ausführungsform der Erfindung kann die Einstellung des variablen Füllstandes der kontinuierlich arbeitenden Reaktoren in Stufe a) durch volumetrische Vergrößerung des Reaktors/der Reaktoren mittels eines Aufsatzes auf den jeweiligen Reaktor erreicht werden, dessen Volumen das gleiche bis zwanzigfache des unteren Teils des Reaktors beträgt. Die zusätzliche geodätische Höhe des Aufsatzes übersteigt die Arbeitshöhe des darunter angeordneten Reaktors vorzugsweise um den Faktor 1,2 bis 7.Besonders bevorzugt ist der Reaktor durch einen konischen Aufsatz vergrößert.

In einer Ausführungsform der Erfindung kann dieser Reaktoraufsatz in der folgenden Weise realisiert werden. Es wird im unteren Höhenteil des Reaktors ein Querschnitt gewählt, der auf die charakteristischen Auslegungskriterien der Begasungsturbine zugeschnitten ist. Die Höhe des Reaktors folgt dann im Verhältnis 0,5-2,0 den eigentlichen Auslegungskriterien der Turbine. Ab der Höhe von 0,5 bis 2,0-mal dem Durchmesser des unteren Teiles des Reaktors erfolgt zunächst eine konische Erweiterung des Querschnitts in einem Winkel von 15 bis 45° bis hin zum Erreichen eines Durchmessers von 1,5 bis 3-mal dem unteren Durchmesser. Es schließt sich ein weiterer Zylinder größeren Durchmessers an mit einer grundsätzlich beliebigen Höhe - vorzugsweise 1,5 bis 3-mal dem Wert des vergrößerten Durchmessers.

Anstelle dieser Ausführung kann auch ein durchgehend konischer Tank oder ein konischer Aufsatz zu Anwendung kommen, der auf dem unteren zylindrischen Teil aufsitzt. Letztendlich entsteht ein zusätzliches Volumen, das gegenüber dem unteren zylindrischen Teil des Reaktors um den Faktor 1 bis 20-mal größer ist. Der in dieser Ausführungsform notwendigerweise höhere Vordruck des Gasversorgungsstromes kann stufenweise dem Füllstand angepasst werden. Im unteren Teil des Reaktors herrschen hinsichtlich Stoffübergang, Vermischung und Umlaufzahl der Flüssigkeit die definierten und beherrschbaren Verhältnisse. Im oberen Teil des Reaktors dominieren Zustände geringer Vermischung und schwächeren Stoffüberganges, die aber immer so eingestellt sind, dass eine Rückreaktion verhindert und gleichzeitig weiteres Kristallwachstum ermöglicht wird. Als äußerst positiver Nebeneffekt nimmt die Gasausnutzung mit steigendem Füllstand des Reaktors zu bis zu einer maximalen möglichen Ausnutzung von mehr als 99,0 % des eingetragenen CO₂.

Zur Herstellung der gewünschten Kristallformen und Korngrößenverteilung werden nun erfindungsgemäß vier Parameter unabhängig voneinander in den kontinuierlich arbeitenden Reaktoren der Stufe a) eingestellt, in denen sich die Keimbildung vollzieht. Es sind dies die Calciumhydroxidkonzentration der Kalkmilch , sodann die mittlere hydraulische Verweilzeit der den Reaktor durchströmenden Kalkmilch, die somit das mittlere Alter der neugebildeten Keime festlegt, der Sättigungsgrad der Kalkmilch mit CO₂, welches bekanntlich nach physikalischer Lösung pH-abhängig in das letztlich reagierende Bicarbonatanion überführt wird und der Umsatzgrad von Calciumhydroxid mit CO₂.

Diese vier für die PCC-Bildung bedeutenden Parameter sind mit dem erfindungsgemäßen Verfahren unabhängig voneinander einstellbar, unabhängig davon ob das CO₂ -haltige Gas streng kontinuierlich mit konstantem Gehalt an CO₂ anliegt oder ob volumetrische Schwankungen und Konzentrationsschwankungen im CO₂- Gehalt des Versorgungsgases vorliegen. Es kann immer gewährleistet werden, dass einerseits der verlangte Grad an CO₂ Abreicherung erfüllt wird, andererseits die Stoffübergangskriterien, die letztlich für das Angebot an Bicarbonatanionen verantwortlich sind, stets auf den verlangten Wert eingestellt werden können.

Der verlangte Umsatzgrad von Calciumhydroxid mit CO₂ kann einerseits eingestellt werden über die Änderung der Calciumhydroxid-Konzentration in der vorgelegten Kalkmilch in Verbindung mit deren Feinheitsgrad und/oder über die Regulierung der elektrischen Leitfähigkeit der flüssigen Phase im Reaktor selbst. Es ist dem Fachmann bekannt, dass sich der Leitfähigkeitswert aus einer Kombination des hydraulischen Durchsatzes der Kalkmilch in Verbindung mit den Parametern der Begasungsvorrichtung einstellen lässt. Ein höherer Durchsatz der Kalkmilch führt zu höheren Leitfähigkeitswerten, da der Anteil an nicht abreagiertem Ca(OH)₂ steigt. Eine höhere Drehzahl der Turbine führt zu einem größeren Energieeintrag und somit zu einer größeren Oberfläche der Ca(OH)₂- Kristallite, was wiederum bewirkt, dass mehr Ca(OH)₂ in die Lösung nachgeliefert werden kann. Ein hoher Leitfähigkeitswert entspricht einer hohen Übersättigung an Ca(OH)₂ und umgekehrt. Es lassen sich Werte der Leitfähigkeit von 0,1 bis 7 mS/cm und mehr einstellen. Bekanntermaßen korrespondiert der jeweilige Wert für die Leitfähigkeit mit dem Umsatzgrad des Ca(OH)₂ zu CaCO₃. Hohe Umsatzraten im Fließgleichgewicht entsprechen geringen Leitfähigkeitswerten und umgekehrt. Die elektrische Leitfähigkeit wird beispielsweise mit einer handelsüblichen Sonde der Fa. Ahlborn oder WTW (Deutschland) gemessen.

Die mittlere hydraulische Verweilzeit der Kalkmilch in einem Reaktor der Stufe a) (=Verhältnis des Volumenstroms der zugeführten Kalkmilch zum Reaktorvolumen) lässt sich für jeden gewünschten Wert der Leitfähigkeit in einem weiten Bereich durch Anheben oder Absenken des Füllstandes des jeweiligen Reaktors einstellen.

Die Einstellung des Sättigungsgrades von CO2 in der Kalkmilch, also die wirksame Konzentration an gelöstem CO₂ - dies entspricht dann der Bicarbonatanionenkonzentration - lässt sich auf unterschiedliche Weise im Reaktor der Stufe a) realisieren:
a) Der Füllstand des Reaktors mit Kalkmilch kann in einem weiten Bereich (zwischen 30 % und 100 %) variabel gehoben und gesenkt werden. Dadurch steigt oder fällt die geodätische Höhe, die die Begasungsturbine überwinden muss. Bei ansonsten unveränderten Belüftungsdaten verbessert oder verschlechtert sich der KLA-Wert (Stoffübergangswert) und als Folge davon die Konzentration an gelöstem CO₂. Somit kann alleine über die Veränderung des Füllstandes der Grad der Übersättigung eingestellt werden. Zusätzlich kann noch die Drehzahl der Turbine geändert werden mit dem Ziel, den Effekt der Änderung des KLA-Wertes zu verstärken oder abzuschwächen.
b) Bei konstantem Füllstand kann die Drehzahl der Begasungsturbine in einem weiten Bereich eingestellt werden (20 bis 60 Hz, die Standarddrehzahl bezieht sich auf 50 Hz)
   Der Stoffübergangswert (KLA- Wert) verändert sich dramatisch im Bereich von 100 bis 600/min, was direkten Einfluss auf die sich dazu stationär einstellende CO₂ - Konzentration in der flüssigen Phase hat.
   Die Gasmenge kann dabei konstant gehalten werden, indem ein inline mitlaufendes Gebläse den kleiner oder größer werdenden Arbeitsdruck der Turbine kompensiert.
c) Es ist auch möglich, eine geringere CO₂-Konzentration in der flüssigen Phase zu realisieren, indem ein in weitem Bereich frei einstellbares Verhältnis von Umluft und Frischgas eingestellt wird. Dadurch kommt es zu einer Herabsetzung der wirksamen CO₂-Konzentration. Gleichzeitig wird durch eine solche Maßnahme auch die wirksame CO₂ Absorptionsrate verbessert auf Werte bis zu mehr als 99,5 %, je nach Verhältnis der Menge an Umluft zu Frischgas. Eingestellt werden können Verhältnisse von 1 zu 1 bis 1 zu 10 an Umluft zu Frischgas.
d) die drei Maßnahmen a bis c können zur Verstärkung oder Abschwächung miteinander kombiniert werden.

Die Abreaktion der Suspension aus dem Zwischenbehälter erfolgt batchweise in Stufe b) in einem oder mehreren Reaktoren, die mit einer Begasungsturbine nach dem gleichen Konstruktionsprinzip wie die Turbinen der kontinuierlichen Reaktoren ausgerüstet sind oder mit einem anderen Begasungssystem, gegebenenfalls auch deutlich einfacherer Bauart. Es hat sich gezeigt, dass im Reifestadium auch mit Begasungsapparaturen gearbeitet werden kann, die hinsichtlich der Homogenität des Gaseintrages einfacher gestaltet sind.

Die in den kontinuierlich arbeitenden Reaktoren vorzugsweise eingesetzte Begasungsturbine ist eine Turbine, die sowohl im Selbstansaugemodus als auch gebläseunterstützt arbeiten kann, insbesondere eine Turbine der Fa. Frings (Deutschland).

Die Frings- Begasungsturbine arbeitet nach dem Rotor-Stator-Prinzip Die Flüssigkeit fließt in den Arbeitsbereich des Rotors ein und wird von diesem radial nach außen in die Statorkanäle geführt. Somit entsteht im inneren Bereich des Rotors ein Unterdruckbereich, in den das Gas eingesaugt wird. Das Gas wird dann in den Kanälen des Stators in einer turbulenten Strömung mit der Flüssigkeit dispergiert. Auf diese Weise vereint die Frings-Turbine die Aufgaben Mischen und Begasen in einer Apparatur.

Die Reifephase der Kristalle in Verbindung mit der Stabilisierung (Nachbelüftung) erfolgt erfindungsgemäß in Stufe b) in einem/mehreren batchweise betriebenen Reaktor(en). Dazu wird entweder aus dem Zwischenbehälter oder im Falle des/der mit Aufsatz arbeitenden Reaktoren aus dem unteren turbulent durchmischten Teil des Reaktors eine gewisse Menge an bereits teilumgesetzter Kalkmilch den diskontinuierlich arbeitenden Reaktoren zugeführt.

Auch in diesen batchweise arbeitenden Reaktoren der Stufe b) lassen sich analog den kontinuierlich arbeitenden Reaktoren der Stufe a) alle Parameter des Verfahrens separat und unabhängig voneinander einstellen. Bedingt durch diesen batch-Betrieb der Endstufe bleibt der Mittelwert des Energieeintrages und der CO₂-Ausnutzung auf dem günstigen Niveau der vorangegangenen kontinuierlichen Stufe(n).

Der vollständige Umsatz des zur Verfügung gestellten CO₂ lässt sich insbesondere durch die voneinander unabhängige Einstellung der Turbinenparameter Drehzahl, Vordruck, Begasungsrate und anteilige Zumischung von Umluft in allen Reaktoren der Stufen a) und b) steuern. Es lässt sich der Grad der CO₂ Abreicherung durch Zuschalten von Umluft in einem weiten Bereich von 90 % bis 99,5 % einstellen bei gleichzeitigem Konstanthalten des gewünschten Gehaltes an gelöstem CO₂.

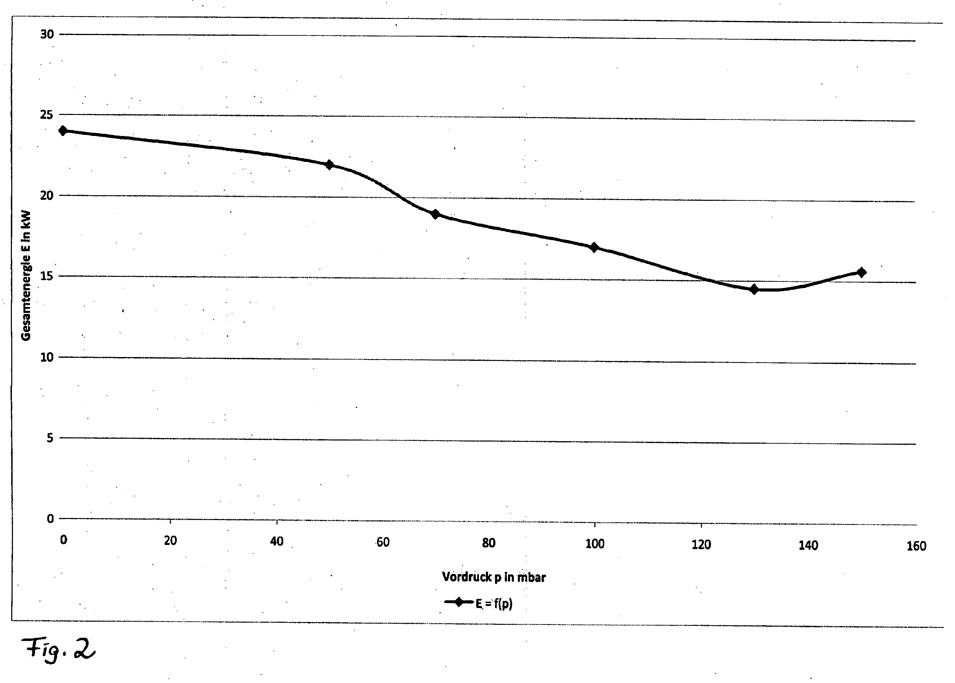

Für alle Reaktoren im Verfahren gilt, dass in Abhängigkeit von der benötigten wirksamen CO₂-Konzentration der Stoffeintrag in erheblichem Umfang energetisch beeinflusst werden kann. Dies kann erfindungsgemäß in einer bevorzugten Ausführungsform durch Aufschalten eines Gebläses auf die eigentliche Begasungsturbine und damit das Schaffen eines Vordruckes geschehen. Es hat sich gezeigt, dass der energetische Gesamtwirkungsgrad der Kombination aus Gebläse und Begasungsturbine erheblich günstiger ist als der Wirkungsgrad bei alleinigem Betrieb der Begasungsturbine im Selbstansaugemodus (vgl. Fig. 2). Mit dem erfindungsgemäßen Verfahren lässt sich bei gleichzeitigem Erreichen eines quasi vollständigen Umsatzes des zur Verfügung gestellten Biogases der Gesamtenergiebedarf der Begasungseinrichtung der Reaktoren durch teilweise oder vollständige Umstellung auf Vordruckbetrieb in Verbindung mit Umluftbetrieb auf weniger als 300 Watt/Nm³ Biomethan senken.

Gegenstand der vorliegenden Erfindung ist auch eine Anlage zur Durchführung des erfindungsgemäßen Verfahrens.

In einer Ausführungsform der Erfindung umfasst die Anlage einen oder mehrere in Serie geschaltete kontinuierlich arbeitende Reaktoren, die jeweils durch eine Hin- und Rückleitung mit einem Zwischenbehälter verbunden sind, der mit einem Rührwerk und einer Begasungseinrichtung zur Begasung mit Biogas versehen ist und seinerseits mit einem oder mehreren in Serie geschalteten diskontinuierlich arbeitenden Reaktoren verbunden ist, wobei alle Reaktoren eine Begasungseinrichtung aufweisen, die zur Begasung mit Biogas und dessen Vermischung mit dem Reaktorinhalt dient, vorzugsweise eine Begasungsturbine, gegebenenfalls mit aufgeschaltetem Gebläse.

Eine bevorzugte Ausführungsform der erfindungsgemäßen Anlage ist in Fig. 3 dargestellt. Diese Ausführungsform weist einen kontinuierlich arbeitenden Reaktor auf, der mit einem Zwischenbehälter kommuniziert, der seinerseits mit zwei diskontinuierlich arbeitenden Reaktoren verbunden ist.

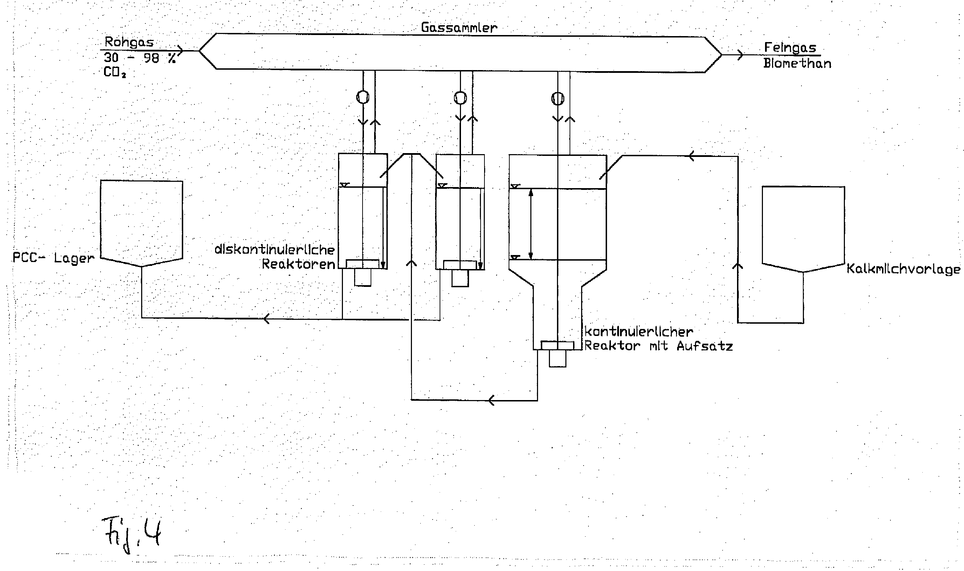

In einer anderen Ausführungsform der erfindungsgemäßen Anlage, die beispielhaft in Fig. 4 dargestellt ist, weist diese einen kontinuierlich arbeitenden Reaktor mit Aufsatz auf, in dem die Keimbildung der Calciumcarbonatkeime betrieben wird, wobei das Volumen des Aufsatzes das gleiche bis zwanzigfache des unteren Teils des Reaktors beträgt und die geodätische Höhe des Aufsatzes die Arbeitshöhe des darunter angeordneten Reaktors um den Faktor 1,2 bis 7 übersteigt und der kontinuierlich arbeitende Reaktor mit einem oder mehreren in Serie geschalteten diskontinuierlich arbeitenden Reaktoren verbunden ist, in denen Kristallwachstum und Kristallstabilisierung erfolgen, wobei alle Reaktoren eine Begasungeinrichtung, vorzugsweise eine Begasungsturbine mit gegebenenfalls aufgeschaltetem Gebläse, aufweisen, die zur Begasung mit Biogas und dessen Vermischung mit dem Reaktorinhalt dient.

In einer weiteren bevorzugten Ausführungsform der Anlage weisen die kontinuierlich arbeitenden Reaktoren und gegebenenfalls auch die diskontinuierlich arbeitenden Reaktoren eine Begasungsturbine auf, auf welche gegebenenfalls ein Gebläse aufgeschaltet ist.

Mit dem erfindungsgemäßen Verfahren und der erfindungsgemäßen Anlage lässt sich nicht nur der energetische Aufwand gering halten, sondern es lassen sich auch alle gewünschten Modifikationen und Kristallformen des präzipitierten Calciumcarbonates herstellen, z. B. scalenohedrales und rhombohedrales Calcit oder aciculares Aragonit.

Nachfolgend soll die Erfindung anhand von Figuren und Beispielen näher erläutert werden. Dabei zeigt
**Fig. 1** die gemessene Abhängigkeit des Gasausnutzungsgrades vom relativen Umsatz und des spezifischen Energiebedarfs vom relativen Umsatz für einen im kontinuierlichen Betrieb arbeitenden Reaktor (1,5 m³ Arbeitsvolumen; Endprodukt s-PCC; Endkonzentration-21 Gew.%PCC).
**Fig. 2** die gemessene Abhängigkeit des Gesamtenergiebedarfes vom angelegten Vordruck für einen im batch-Betrieb arbeitenden Reaktor des erfindungsgemäßen Verfahrens (1,5 m³ Arbeitsvolumen; Endprodukt r-PCC; Endkonzentration-21Gew.%PCC). Bis zum sogenannten Flutungspunkt nimmt der Gesamtenergiebedarf der Kombination Gebläse und Begasungsturbine ab und der Wirkungsgrad entsprechend zu. Der sog. Flutungspunkt entspricht dem maximal möglichen Vordruck.
**Fig. 3** das Schema einer beispielhaften Anlage zur Durchführung des erfindungsgemäßen Verfahrens mit Zwischenbehälter.
**Fig. 4** das Schema einer beispielhaften Anlage zur Durchführung des erfindungsgemäßen Verfahrens mit konischem Reaktoraufsatz.

Nachfolgend wird die Erfindung anhand von Beispielen näher erläutert.

### Beispiel 1

Zur Herstellung von S-PCC wurde eine Anordnung mit Zwischenbehälter benutzt. Reaktor 1 wurde kontinuierlich mit einem Füllstand von 600 l betrieben. Der gewünschte Sättigungsgrad an Ca(OH)₂ wurde eingestellt, indem die durchschnittliche Verweildauer der Kalkmilch auf 2,6 h eingestellt wurde; die Leitfähigkeit betrug 5 mS/cm. Der Sättigungsgrad an CO₂ in der Lösung wurde über die Drehzahl der Turbine auf einen relativ hohen Wert (1480 rpm) eingestellt, was einem CO₂-Umsatzgrad von etwa 80 % entsprach.

Der Zwischenbehälter, dessen Volumen das dreifache Volumen des kontinuierlich betriebenen Reaktors besaß, wurde bis maximalen Volumen (1800 l) aufgefüllt. Danach wurde batch-wise in den diskontinuierlich betriebenen Reaktor abgepumpt und die Reaktion dort zu Ende geführt. Ein Teil der Gasmenge wurde hier durch Umluft bereitgestellt.

Nachfolgend sind die Parameter für die Herstellung von S-PCC zusammengefasst:

| | |
|---|---|
| C_{Kalkmilch} | = 17 Gew% |
| t_{kalkmilch} | = 20°C |
| d₅₀ der Kalkmilch-Kristallite | = 3,2 µm |
| volumetrischer Durchsatz Kalkmilch | = 3,73 l/min |

| | | |
|---|---|---|
| Stufe 1: | kontinuierlich mit Rückführung über Zwischenbehälter Reaktorvolumen 600 l, ausgestattet mit selbstansaugender Begasungsturbine | |
| | Mit 36 Nm³/h; Drehzahl 1480 rpm | |
| | | |
| | c _{CO2 ein} | = 20 % |
| | c _{CO2 aus} | = 4 % |
| | t | = 45 °C, konstant geregelt |
| | Umsatzrate U | = 50 % |
| | Durchschnittliche Verweilzeit | = 2,6 h (bezogen auf Reaktor) |
| | | 10,7 h (bezogen auf Reaktor und Zwischen behälter) |
| | Transferpumpe von Reaktor in Zwischenbehälter und retour | = 30 l/h |
| | V_{zwischenbehaler} | = 1800 l, ausgestattet mit Becherrührwerk 1,5 kW |
| | | |
| Stufe 2: | diskontinuierlich, Entnahme aus Zwischenbehälter | |
| | V_{Reaktor} | = 600 l, ausgestattet mit Begasungsturbine mit |
| | Vordruck (Drehzahl | = 1480 rpm) / Vordruck per Gebläse mit Umluft |
| | | = 100 mbar |
| | Gesamtvolumen | = 50 Nm³/h |
| | c _{CO2 ein} | = 35 % |
| | c _{CO2 aus} | = 20 % |
| | Reaktionszeit | = 0,76 h |
| | t zu Beginn | = 45 °C, ungeregelt |
| | Nachbelüftung zur Stabilisierung: | |
| | c _{CO2 ein} | = 35 % |
| | c _{CO2 aus} | = 32 % |
| | Begasungsdaten identisch wie bei Stufe 2 beschrieben, Reaktionszeit: 0,17 h | |
| | t = ungeregelt | |

### Charakterisierung des Endproduktes:

- Morphologie: scalenoedrisch, aggregiert,
- d₅₀ 1,7 µm

### Beispiel 2

Zur Herstellung von Nano-PCC wurde eine Anordnung gewählt, bei der der Zwischenbehälter (der mit dem kontinuierlich betriebenen Reaktor 1 verbunden war) um den Faktor 21 größer war als Reaktor 1. Der Durchsatz der Kalkmilch wurde in Reaktor 1 so eingestellt, dass sich eine Leitfähigkeit von ca. 6 mS/cm ergab, was wiederum einer Verweilzeit der Kalkmilch von 0,32 h entsprach. Der CO₂-Sättigungsgrad war sehr hoch, bedingt dadurch, dass die Drehzahl der Turbine mit 1776 rpm gewählt wurde.

Aus Reaktor 1, in welchem durch den gewählten Parametersatz die erzeugte Kristallmorphologie bestimmt wird, wurde kontinuierlich in den Zwischenbehälter gepumpt und dort aus batch-wise in einem vom Volumen her betrachtet gleich großen weiteren Reaktor überführt. Dort wurde eine Kombination von stark reduzierter Drehzahl und Füllstand des Reaktors gewählt, so dass sich ein relativ schwacher CO₂- Umsatz ergab (76 %). Die Reaktion wurde in einem weiteren extern angeordneten Reaktor zu Ende geführt.

Nachfolgend sind die Parameter für die Herstellung von Nano-PCC zusammengefasst:

| | | |
|---|---|---|
| | C_{Kalkmilch} | = 7,2 Gew% |
| | t_{Kalkmilch} | = 30 °C |
| | d₅₀ der Kalkmilch-Kristallite | = 2,0 µm |
| | volumetrischer Durchsatz _{Kalkmilch} | = 2,56 l/min |

| | | |
|---|---|---|
| Stufe 1: | kontinuierlich mit Rückführung über zusätzlich begasten Zwischenbehälter | |
| | Reaktorvolumen 8 l, ausgestattet mit selbstansaugender Begasungsturbine | |
| | Drehzahl 1776 rpm; Begasungsrate 520 l/h | |
| | c _{CO2 ein} | = 30 % |
| | c _{CO2 aus} | = 3 % |
| | t | = 30 °C, konstant geregelt |
| | Umsatzrate U | = 5 % |
| | Durchschnittliche Verweilzeit | = 0,32 h (bezogen auf Reaktor) 68 h (bezogen auf Reaktor und Zwischenbehälter) |
| | | |
| | Transferpumpe von Reaktor in Zwischenbehälter und retour = 10 l/h | |
| | V_{Zwischenbehälter} | = 168 l, ausgestattet mit Rührwerk 50 W |
| | Lanzenbelüftung mit 50 l/h mit c _{CO2} | = 30 % |
| | | |
| Stufe 2: | diskontinuierlich, Entnahme aus Zwischenbehälter | |
| | V_{Reaktor} | = 8 l, ausgestattet mit selbstansaugender |
| | Begasungsturbine (Drehzahl = 1184 rpm) / Begasungsrate 360 l/h | |
| | | |
| | c _{CO2 ein} | = 50 % |
| | c _{CO2 aus} | = 12 % |
| | t | = 30 °C, konstant geregelt |
| | Reaktionszeit | = 1,3 h |

### Nachbehandlung und Stabilisierung extern

### Charakterisierung des Endproduktes:

- Morphologie: mehr als 90 % calcitisch,
- Habitus: kubisch, leicht aggregiert,
- d₅₀ 100 bis 150 nm

### Beispiel 3

Zur Herstellung von acicularem PCC wurde ein Reaktor eingesetzt, auf dessen unteren Teil ein weiterer Behälter (Erweiterungskonus) aufgesetzt war, dessen Volumen 6,25 mal größer war als das des darunterliegenden Reaktors. Es wurde eine niedrige Turbinendrehzahl (880 rpm) eingestellt. In Verbindung mit der zusätzlichen geodätischen Höhe des Aufsatzes ergab sich ein Ausnutzungsgrad des eingetragenen CO₂ von ca. 44 %. Die Leitfähigkeit als Maß für die relative Sättigung des Systems an Ca(OH)₂ betrug 4,9 mS/cm. Dieser Wert ergab sich aus der Verweilzeit der Kalkmilch, die bezogen auf den unteren aktiven Teil des Reaktors etwa 2,3 h betrug.

Aus dem oberen Teil des Erweiterungskonus wurde diskontinuierlich entnommen und in einem weiteren Reaktor wurde die Reaktion zu Ende geführt. Die Parameter konnten hier in einem weiten Bereich ohne erkennbaren Einfluss auf die Kristallmorphologie variiert werden. Die Parameter der Turbine bestimmen letztlich den Zeitbedarf für diesen Teil der Reaktion. Auf diese Weise konnte der Zeitbedarf mit dieser Reaktoranordnung je nach Vorgaben des laufenden Betriebes zwischen 0,8 h und 2 h eingestellt werden. Die im Beispiel beschriebene Zeit von 1,2 h wurde erreicht durch eine Turbinendrehzahl von 1480 rpm.

Nachfolgend sind die Parameter für die Herstellung von acicularem PCC zusammengefasst:

| | | |
|---|---|---|
| | C_{Kalkrnilch} | = 14,2 Gew% |
| | t_{Kalkmilch} | = 27 °C |
| | d₅₀ der Kalkmilch-Kristallite | = 4,0 µm |
| | volumetrischer Durchsatz _{Kalkmilch} | = 348 l/min |
| | c_{CO2} | = 27 % |

| | | |
|---|---|---|
| Stufe 1: | kontinuierlich mit aufgesetztem Reaktorteil der im Durchmesser erweitert ist, unterer Reaktorteil mit Gebläse- unterstützer Turbine begast, Begasungsrate 40 m₃/h, Drehzahl = 888 rpm | |
| | V_{Reaktor} : | unterer Teil des Reaktors = 800 l (Höhe 1,2 m) oberer Teil des Reaktors, |
| | | incl. Erweiterungskonus = 5000 l (Höhe_{Gesamt} 4,3 m) |
| | | |
| | c _{CO2 ein} | = 27 % |
| | c _{CO2 aus} | = 12 % |
| | t | = 55 °C, konstant geregelt |
| | Umsatzrate U | = 40 % |
| | durchschnittliche Verweilzeit | = 2,3 h (bezogen auf unteren Reaktorteil) |
| | | 16,7 h (bezogen auf Gesamtvolumen) |
| | | |
| Stufe 2: | diskontinuierlich, Entnahme von teilweise umgesetzter Suspension aus dem oberen Teil des Reaktors | |
| | V_{Reaktor} : | 600 l |
| | Begasung mit selbstansaugender Turbine, Begasungsrate 36 Nm³/h, Drehzahl 1480 rpm | |
| | | |
| | c _{CO2 ein} | = 45 % |
| | c _{CO2 aus} | = 9% |
| | t | = 55 °C, konstant geregelt |
| | Reaktionszeit | = 1,2 h |
| | | |
| | Nachbegasung zur Stabilisierung = 0,1 h mit folgendem Datensatz: | |
| | c _{CO2 ein} | = 45 % |
| | c _{CO2 aus} | = 43 % |
| | Begasung mit selbstansaugender Turbine, Begasungsrate 36 Nm³/h, Drehzahl 1480 rpm | |

### Charakterisierung des Endproduktes:

- Morphologie: acicular, leicht aggregiert,
- durchschnittliche Länge etwa 2,8 bis 3,1 μm
- durchschnittliche Breite etwa 0,4 bis 0,7 μm
- charakteristisches Verhältnis Länge zu Breite etwa 5,3 μm

## Patentansprüche

1. Verfahren zur Herstellung von kristallinem Calciumcarbonat durch Umsetzung von Calciumhydroxid mit CO₂, wobei das Calciumhydroxid als Kalkmilch bereitgestellt wird, als CO₂ - Quelle Biogas dient, welches im Verfahren durch die Abreicherung des CO₂ gleichzeitig zu Biomethan aufgereinigt wird, und das Verfahren eine erste Stufe der Keimbildung der Calciumcarbonatkeime und eine nachfolgende, von der Keimbildung getrennte Stufe des Kristallwachstums umfasst,
**dadurch gekennzeichnet, dass**
das Verfahren semikontinuierlich geführt wird, indem
a) in der ersten Stufe die Keimbildung in einem oder mehreren Reaktoren einstufig oder mehrstufig kontinuierlich und mit optional variablem Füllstand an Kalkmilch in jedem Reaktor betrieben wird und
b) in der zweiten Stufe Kristallwachstum und Kristallstabilisierung in einem oder mehreren Reaktoren im Batch-Verfahren und mit konstantem Füllstand an teilumgesetzter Kalkmilch in jedem Reaktor betrieben werden,
wobei der Eintrag von Biogas und Umluft in die Reaktoren der Stufen a) und b) mittels einer in jedem Reaktor vorhandenen Begasungseinrichtung, vorzugsweise einer Begasungsturbine, erfolgt und
in Stufe a) die gewünschte Kristallform der Calciumcarbonatkristalle durch die voneinander unabhängige Einstellung der Calciumhydroxidkonzentration der Kalkmilch , der mittleren hydraulischen Verweilzeit der eingetragenen Kalkmilch, des Sättigungsgrades der Kalkmilch mit CO₂ und des Umsatzgrades von Calciumhydroxid mit CO₂ gesteuert wird.

2. Verfahren nach Anspruch 1,
**dadurch gekennzeichnet, dass**
die Einstellung eines variablen Füllstands für jeden kontinuierlich betriebenen Reaktor in Stufe a) durch einen mit diesem kommunizierenden Zwischenbehälter gewährleistet wird, dessen Volumen das gleiche bis hundertfache des Volumens des kontinuierlich betriebenen Reaktors beträgt, vorzugsweise das ein- bis zwanzigfache, und der mit dem/den Reaktoren der zweiten Stufe verbunden ist.

3. Verfahren nach Anspruch 2,
**dadurch gekennzeichnet, dass**
im Zwischenbehälter eine Begasungsvorrichtung zur Begasung der teilumgesetzten Kalkmilch mit Biogas vorgesehen ist und ein Rührwerk zum Rühren der Kalkmilch.

4. Verfahren nach Anspruch 1,
**dadurch gekennzeichnet, dass**
die Einstellung eines variablen Füllstands für jeden kontinuierlich betriebenen Reaktor in Stufe a) durch Reaktorvergrößerung mittels eines Aufsatzes auf den Reaktor gewährleistet wird, dessen Volumen das gleiche bis zwanzigfache des Volumens des darunter angeordneten Reaktors beträgt.

5. Verfahren nach einem der Ansprüche 1 bis 4,
**dadurch gekennzeichnet, dass**
als Begasungseinrichtung in den kontinuierlich arbeitenden Reaktoren der Stufe a) eine Begasungsturbine eingesetzt wird.

6. Verfahren nach einem der Ansprüche 1 bis 5,
**dadurch gekennzeichnet, dass**
die Einstellung des Sättigungsgrades von CO₂ im Reaktor in Stufe a) über die Änderung des Füllstandes, gegebenenfalls in Verbindung mit einer Änderung der Drehzahl der Begasungsturbine, realisiert wird.

7. Verfahren nach einem der Ansprüche 1 bis 6,
**dadurch gekennzeichnet, dass**
die Einstellung der mittleren hydraulischen Verweilzeit der Kalkmilch im Reaktor in Stufe a) durch Anheben oder Absenken des Füllstandes realisiert wird.

8. Verfahren nach einem der Ansprüche 1 bis 7,
**dadurch gekennzeichnet, dass**
die Einstellung des Umsatzgrades von Calciumhydroxid mit CO₂ im Reaktor in Stufe a) über die Änderung der Konzentration des Calciumhydroxids in der vorgelegten Kalkmilch in Verbindung mit deren Feinheitsgrad erfolgt und/oder über die Regulierung der elektrischen Leitfähigkeit der flüssigen Phase im Reaktor.

9. Verfahren nach einem der Ansprüche 1 bis 8,
**dadurch gekennzeichnet, dass**
der vollständige Umsatz des zur Verfügung gestellten CO₂ durch die voneinander unabhängige Einstellung der Turbinenparameter Drehzahl, Vordruck, Begasungsrate und anteilige Zumischung von Umluft im jeweiligen Reaktor gesteuert wird.

10. Verfahren nach Anspruch 9,
**dadurch gekennzeichnet, dass**
der Vordruck durch Aufschalten eines Gebläses auf die Begasungseinrichtung erzeugt und eingestellt wird.

11. Anlage zur Durchführung des Verfahrens der Ansprüche 1 bis 10,
aufweisend einen oder mehrere in Serie geschaltete kontinuierlich arbeitende Reaktoren, in denen die Keimbildung der Calciumcarbonatkeime betrieben wird und die jeweils durch eine Hin- und Rückleitung mit einem Zwischenbehälter verbunden sind, der mit einem Rührwerk und einer Begasungseinrichtung zur Begasung mit Biogas versehen ist und der das Arbeiten mit variablem Füllstand im kommunizierenden Reaktor erlaubt, wobei der Zwischenbehälter seinerseits mit einem oder mehreren in Serie geschalteten diskontinuierlich arbeitenden Reaktoren verbunden ist, in denen Kristallwachstum und Kristallstabilisierung erfolgen, wobei alle Reaktoren eine Begasungeinrichtung, vorzugsweise eine Begasungsturbine mit gegebenenfalls aufgeschaltetem Gebläse, aufweisen, die zur Begasung mit Biogas und dessen Vermischung mit dem Reaktorinhalt dient.

12. Anlage nach Anspruch 11,
aufweisend einen kontinuierlich arbeitenden Reaktor, der durch eine Hin- und eine Rückführung mit einem Zwischenbehälter verbunden ist, der seinerseits mit zwei diskontinuierlich arbeitenden Reaktoren verbunden ist.

13. Anlage zur Durchführung der Verfahren der Ansprüche 1 bis 10,
aufweisend einen kontinuierlich arbeitenden Reaktor mit Aufsatz, in dem die Keimbildung der Calciumcarbonatkeime betrieben wird, wobei das Volumen des Aufsatzes das gleiche bis zwanzigfache des unteren Teils des Reaktors beträgt und die geodätische Höhe des Aufsatzes die Arbeitshöhe des darunter angeordneten Reaktors um den Faktor 1,2 bis 7 übersteigt und der kontinuierlich arbeitende Reaktor mit einem oder mehreren in Serie geschalteten diskontinuierlich arbeitenden Reaktoren verbunden ist, in denen Kristallwachstum und Kristallstabilisierung erfolgen, wobei alle Reaktoren eine Begasungeinrichtung, vorzugsweise eine Begasungsturbine mit gegebenenfalls aufgeschaltetem Gebläse, aufweisen, die zur Begasung mit Biogas und dessen Vermischung mit dem Reaktorinhalt dient.

## Claims

1. A process for preparing crystalline calcium carbonate by the conversion of calcium hydroxide with CO₂, wherein the calcium hydroxide is provided as lime water, as CO₂ source biogas is used which is simultaneously cleaned up in the process to biomethane due to the reduction of the amount of CO₂, and the process comprises a first stage of nucleation of the calcium carbonate nuclei and a subsequent from nucleation separated stage of crystal growth,
**characterized in that**
the process is carried out as a semicontinuous process by
a) carrying out, in the first stage, single-stage or multistage continuous nucleation in one or more reactors with an optionally variable lime water filling level in each reactor; and
b) carrying out, in the second stage, crystal growth and crystal stabilization in the form of batch processing in one or more reactors with a constant filling level of partially converted lime water in each reactor,
wherein biogas and circulating air are charged into the reactors of stages a) and b) by means of a gassing device that is present in each reactor and is preferably a gassing turbine; and
in stage a), the desired crystal shape of the calcium carbonate crystals is controlled by independently of each other adjusting the calcium hydroxide concentration of the lime water, the mean hydraulic retention time of the charged lime water, the degree of saturation of the lime water with CO₂, and the degree of conversion of calcium hydroxide with CO₂.

2. The process according to claim 1,
**characterized in that**
the adjustment of a variable filling level for each continuously operated reactor in stage a) is ensured by an intermediate vessel communicating with said reactor, the volume of said intermediate vessel being the same to hundred times the volume of the continuously operated reactor, preferably from one time to twenty times the volume thereof, and said intermediate vessel being connected to the reactor(s) of the second stage.

3. The process according to claim 2,
**characterized in that**
in the intermediate vessel a gassing device for gassing the partially converted lime water with biogas and a stirring device for stirring the lime water are provided.

4. The process according to claim 1,
**characterized in that**
the adjustment of a variable filling level for each continuously operated reactor in stage a) is ensured by extending the reactor by placing an attachment on the reactor, the volume of said attachment being the same to twenty times the volume of the reactor arranged below the attachment.

5. The process according to any one of claims 1 to 4,
**characterized in that**
a gassing turbine is used as gassing device in the continuously operating reactors of stage a).

6. The process according to any one of claims 1 to 5,
**characterized in that**
the adjustment of the saturation degree of CO₂ in the reactor in stage a) is realized by changing the filling level, optionally combined with a change in the driving speed of the gassing turbine.

7. The process according to any one of claims 1 to 6,
**characterized in that**
the adjustment of the mean hydraulic retention time of the lime water in the reactor in stage a) is realized by increasing or decreasing the filling level.

8. The process according to any one of claims 1 to 7,
**characterized in that**
the degree of the conversion rate of calcium hydroxide with CO₂ in the reactor in stage a) is adjusted by changing the concentration of calcium hydroxide in the provided lime water combined with the degree of fineness of the lime water and/or by regulating the electrical conductivity of the liquid phase in the reactor.

9. The process according to any one of claims 1 to 8,
**characterized in that**
the complete conversion of the provided CO₂ is controlled by independently from each other adjusting the turbine parameters of driving speed, admission pressure, gassing rate and proportional addition of circulating air in the respective reactor.

10. The process according to claim 9,
**characterized in that**
admission pressure is generated and adjusted by connecting a fan to the gassing device.

11. A plant for carrying out the process of claims 1 to 10,
having one or more continuously operating series-connected reactors, in which the nucleation of the calcium carbonate nuclei is carried out, each reactor being connected to an intermediate vessel via a go-and-return conduit, which intermediate vessel is equipped with a stirring device and a gassing device for gassing with biogas and allows operation with a variable filling level in the communicating reactor, wherein the intermediate vessel for its part is connected to one or more batch-operated series-connected reactors, in which crystal growth and crystal stabilization are carried out, wherein all reactors have a gassing device, preferably a gassing turbine, with a fan connected to the gassing device where appropriate, which gassing device is used for gassing with biogas and for mixing the biogas with the contents of the reactor.

12. The plant according to claim 11,
having a continuously operating reactor connected to an intermediate vessel via a charging conduit and a return conduit, which intermediate vessel for its part is connected to two batch-operated reactors.

13. A plant for carrying out the processes of claims 1 to 10,
having a continuously operating reactor with an attachment, in which the nucleation of the calcium carbonate nuclei is carried out, wherein the volume of the attachment is the same to twenty times the volume of the lower part of the reactor and the geodetic height of the attachment exceeds the working height of the reactor arranged below the attachment by a factor 1.2 to 7 and the continuously operating reactor is connected to one or more batch-operated series-connected reactors, in which crystal growth and crystal stabilization are carried out, wherein all reactors have a gassing device, preferably a gassing turbine, with a fan connected to the gassing device where appropriate, which gassing device is used for gassing with biogas and for mixing the biogas with the contents of the reactor.

## Revendications

1. Procédé de fabrication de carbonate de calcium cristallin par mise en réaction d'hydroxyde de calcium avec du CO₂, l'hydroxyde de calcium étant fourni en tant que lait de chaux, du biogaz servant de source de CO₂ et étant, dans le procédé, purifié simultanément en biométhane par appauvrissement du CO₂, et le procédé comprenant une première étape de germination des germes de carbonate de calcium et une étape ultérieure de croissance cristalline séparée de la germination,
**caractérisé en ce que**
le procédé est conduit de façon semi-continue,
a) la germination étant effectuée, dans la première étape, dans un ou plusieurs réacteurs, de façon continue en une étape ou en plusieurs étapes, et avec un niveau de lait de chaux optionnellement variable dans chaque réacteur, et
b) la croissance cristalline et la stabilisation cristalline étant, dans la deuxième étape, effectuées dans un ou plusieurs réacteurs dans le procédé par lots et avec un niveau constant de lait de chaux ayant partiellement réagi dans chaque réacteur,
l'introduction de biogaz et d'air ambiant dans les réacteurs des étapes a) et b) s'effectuant au moyen d'un dispositif de gazage présent dans chaque réacteur, de préférence une turbine de gazage et,
dans l'étape a), la forme cristalline souhaitée des cristaux de carbonate de calcium est commandée par les réglages, indépendants les uns des autres, de la concentration en hydroxyde de calcium du lait de chaux, du temps de séjour hydraulique moyen du lait de chaux introduit, du degré de saturation du lait de chaux en CO₂ et du taux de réaction de l'hydroxyde de calcium avec le CO₂.

2. Procédé selon la revendication 1,
**caractérisé en ce que**
le réglage d'un niveau variable pour chaque réacteur fonctionnant en continu dans l'étape a) est garanti par un réservoir intermédiaire communiquant avec le réacteur, dont le volume est compris entre une fois et cent fois le volume du réacteur fonctionnant en continu, de préférence compris entre une fois et vingt fois ce volume, et qui est raccordé au/aux réacteur(s) de la deuxième étape.

3. Procédé selon la revendication 2,
**caractérisé en ce que**,
dans le réservoir intermédiaire, il est prévu un dispositif de gazage pour le gazage du lait de chaux ayant partiellement réagi avec du biogaz et un agitateur pour agiter le lait de chaux.

4. Procédé selon la revendication 1,
**caractérisé en ce que**
le réglage d'un niveau variable pour chaque réacteur fonctionnant en continu dans l'étape a) est garanti par un agrandissement du réacteur au moyen d'une partie supérieure sur le réacteur dont le volume est compris entre une fois et vingt fois le volume du réacteur disposé au-dessous.

5. Procédé selon une des revendications 1 à 4,
**caractérisé en ce**
**qu'**une turbine de gazage est utilisée comme dispositif de gazage dans les réacteurs travaillant en continu de l'étape a).

6. Procédé selon une des revendications 1 à 5,
**caractérise en ce que**
le réglage du degré de saturation du CO₂ dans le réacteur dans l'étape a) est réalisé par le biais de la modification du niveau, éventuellement en liaison avec une modification de la vitesse de rotation de la turbine de gazage.

7. Procédé selon une des revendications 1 à 6,
**caractérisé en ce que**
le réglage du temps de séjour hydraulique moyen du lait de chaux dans le réacteur dans l'étape a) est réalisé par l'augmentation ou la diminution du niveau.

8. Procédé selon une des revendications 1 à 7,
**caractérise en ce que**
le réglage du taux de réaction de l'hydroxyde de calcium avec le CO₂ dans le réacteur dans l'étape a) s'effectue par le biais de la modification de la concentration de l'hydroxyde de calcium dans le lait de chaux introduit en liaison avec son degré de pureté et/ou par le biais de la régulation de la conductibilité électrique de la phase liquide dans le réacteur.

9. Procédé selon une des revendications 1 à 8,
**caractérisé en ce que**
la réaction complète du CO₂ mis à disposition est commandée par les réglages, indépendants les uns des autres, des paramètres de turbine vitesse de rotation, pression d'alimentation, taux de gazage et proportion d'ajout d'air ambiant dans le réacteur respectif.

10. Procédé selon la revendication 9,
**caractérisé en ce que**
la pression d'alimentation est produite et est réglée par le branchement d'un ventilateur sur le dispositif de gazage.

11. Installation destinée à la réalisation du procédé selon les revendications 1 à 10,
présentant un ou plusieurs réacteurs montés en série et travaillant en continu, dans lesquels la germination des germes de carbonate de calcium est effectuée et qui sont raccordés respectivement par une conduite aller et une conduite retour à un réservoir intermédiaire qui est muni d'un agitateur et d'un dispositif de gazage pour le gazage avec du biogaz et qui permet le fonctionnement avec un niveau variable dans le réacteur communiquant, le réservoir intermédiaire étant de son côté raccordé à un ou plusieurs réacteurs montés en série et travaillant de façon discontinue, dans lesquels s'effectuent la croissance cristalline et la stabilisation cristalline, tous les réacteurs présentant un dispositif de gazage, de préférence une turbine de gazage, avec éventuellement le branchement d'un ventilateur, qui sert au gazage avec du biogaz et au mixage de celui-ci avec le contenu des réacteurs,

12. Installation selon la revendication 11,
présentant un réacteur travaillant en continu, qui est raccordé par une conduite aller et une conduite retour à un réservoir intermédiaire qui est de son côté raccordé à deux réacteurs travaillant de façon discontinue.

13. Installation destinée à la réalisation des procédés selon les revendications 1 à 10,
présentant un réacteur travaillant en continu avec une partie supérieure où est effectuée la germination des germes de carbonate de calcium, le volume de la partie supérieure étant compris entre une fois et vingt fois la partie inférieure du réacteur, et la hauteur géodésique de la partie supérieure dépassant d'un facteur 1,2 à 7 la hauteur de travail du réacteur placé au-dessous, et le réacteur travaillant en continu étant raccordé à un ou plusieurs réacteurs montés en série et travaillant de façon discontinue dans lesquels s'effectuent la croissance cristalline et la stabilisation cristalline, tous les réacteurs présentant un dispositif de gazage, de préférence une turbine de gazage, avec éventuellement le branchement d'un ventilateur, qui sert au gazage avec du biogaz et au mixage de celui-ci avec le contenu des réacteurs.
